# EUROPEAN PATENT SPECIFICATION

(11) **EP 2 083 168 B1**
(45) Date of publication and mention of the grant of the patent: **08.10.2014**
(21) Application number: 08022508.9
(22) Date of filing: 29.12.2008
(51) Int. Cl.: F03B 13/10, F03B 13/06, F03B 3/06, F03B 3/18, F03B 11/02

(54) **Draft tube of hydraulic machinery**
Saugrohr einer Hydraulikmaschine
Tube d'aspiration dans une machine hydraulique

(30) Priority: 16.01.2008 JP 2008006363
(43) Date of publication of application: 29.07.2009
(73) Proprietor: Hitachi Mitsubishi Hydro Corporation, Minato-ku Tokyo 108-0014 (JP)
(72) Inventor: Shingai, Kenji, Tokyo 100-8220 (JP); Nomoto, Satoru, Tokyo 100-8220 (JP); Tani, Kiyohito, Tokyo 100-8220 (JP)
(74) Representative: MERH-IP Matias Erny Reichl Hoffmann

(56) References cited:
- WO-A1-01/11234
- WO-A1-2004/029415
- JP-A- 7 158 550
- JP-U- 61 186 769
- US-A- 1 955 070

## Description

### FIELD OF THE INVENTION

The present invention relates to a draft tube of hydraulic machinery having a pier or a partition plate.

### BACKGROUND OF THE INVENTION

A draft tube of hydraulic machinery is provided on the downstream side of a rotatably supported runner so as to guide a flow with a swirl from the runner to a tailrace outlet (a freeing port). The draft tube, the internal cross-sectional area of which gradually increases toward the down stream, decelerates the interior flow and enhances the pressure of the flow. Thus, the draft tube plays a role to reduce discharged kinetic energy.

The draft tube of hydraulic machinery is buried in the ground or provided underwater according to usage. In this case, the draft tube may be deformed or broken due to a difference in pressure between inside and outside. To avoid this problem, a reinforcing member, called a pier, is provided inside the draft tube of the hydraulic machinery.

The pier, having a thickness and length to withstand an external force, causes energy loss by shock, friction, a reverse flow and the like, and degrades the performance of the entire hydraulic machinery. To suppress the degradation in the performance due to the existence of the pier, various methods have been proposed, as disclosed in Japanese Unexamined Patent Application Publications No. HEI 7-54754 and No. HEI 7-158550. However, most of the methods merely reduce flow nonuniformity inside a flow channel partitioned with the pier.

It is known that a flow running along a wall surface with gradual slowdown, as in the case of a flow in the vicinity of an inner wall of the draft tube, often causes boundary layer separation. When a blunt material, such as a pier, exists in the boundary layer, a characteristic vortex, called a "horseshoe vortex", is generated in the vicinity of a junction of the material and the wall surface.

In the draft tube having a pier, a horseshoe vortex is generated at a junction of an upstream-side end of the pier and the inner wall of the draft tube. The horseshoe vortex is disclosed in detail in a reference, C. J. Baker, "The laminar horseshoe vortex", J. Fluid Mech., vol. 95, part 2, 347-368. The generation of this vortex induces large-scale boundary layer separation around the upstream-side end of the pier and causes significant energy loss. Therefore, it is very important to suppress the generation of the horseshoe vortex and the boundary layer separation in the upstream-side end of the pier in order to reduce the energy loss.

It is an object of the present invention to provide a draft tube of hydraulic machinery which suppresses generation of the horseshoe vortex in a junction of the upstream-side end of the pier and the inner wall of the draft tube and reduces energy loss in the draft tube.

Further, JP 61186 769 U and US 1955 070 A describe draft tubes of a hydraulic machine.

### SUMMARY OF THE INVENTION

The above-discussed problems are solved by the invention according to the independent claim. Further preferred developments are described by the dependent claims.

The present invention provides a draft tube of hydraulic machinery including a water-flow control part on the upstream side of the junction of the upstream-side end of the pier and the inner wall of the draft tube. The water-flow control part suppresses generation of stagnation on the upstream side of the junction.

Preferably, the water-flow control part is formed such that an angle between the upstream-side end of the pier and an upper surface of the water-flow control part is equal to or greater than 90° in a plane including a cross-section of the pier viewed from a side surface of the draft tube.

Preferably, the water-flow control part is formed such that the length from the inner wall of the draft tube to the surface of the water-flow control part along an extended line of the upstream-side end of the pier toward the inner wall is equal to 0.1D or more, where D denotes the maximum thickness of the pier.

Preferably, the water-flow control part has a triangular pyramid shape. A vertex of the water-flow control part is in contact with the inner wall of the draft tube on the upstream side, and a bottom surface of the water-flow control part is in contact with the upstream-side end of the pier on the downstream side.

Since the draft tube of hydraulic machinery has the internal cross-sectional area increasing toward the down stream, without the water-flow control part of the present invention, stagnation is generated on the upstream side of the junction of the upstream-side end of the pier and the inner wall of the draft tube, and a horseshoe vortex is generated on the upstream side. The draft tube according to the present invention includes the water-flow control part which suppresses the generation of the stagnation and prevents the generation of the horseshoe vortex in the vicinity of the junction. As a result, the draft tube of hydraulic machinery according to the present invention can reduce energy loss due to a reverse flow and improve hydraulic performance, such as turbine efficiency or pump efficiency.

### BRIEF DESCRIPTION OF THE DRAWINGS

Fig. 1 is a top view of a runner, a draft tube, a pier, and a tailrace outlet of hydraulic machinery in accordance with the present invention, viewed from a vertical direction to a flow;
Fig. 2 is a side view of a runner, a draft tube, a pier, and a tailrace outlet of hydraulic machinery in accordance with the present invention, viewed from a vertical direction to a flow;
Fig. 3 is a perspective view of a draft tube in accordance with a first embodiment of the present invention;
Figs. 4A and 4B are a top view and a side view, respectively, showing a flow in the vicinity of a junction of the upstream-side end of the pier and the draft tube in a comparative example (without a water-flow control part) for the embodiment of the present invention;
Figs. 5A and 5B are a top view and a side view, respectively, showing a flow in the vicinity of the junction of the upstream-side end of the pier and the draft tube in the embodiment (with the water-flow control part) of the present invention;
Fig. 6A is an anterior view of the pier and the water-flow control part, viewed from the upstream side, where the water-flow control part has an oval shape in the first embodiment of the present invention;
Fig. 6B is a top view of the pier and the water-flow control part, where the water-flow control part has an oval shape in the first embodiment of the present invention;
Fig. 7A is an anterior view of the pier and the water-flow control part, viewed from the upstream side, where the water-flow control part has a prism shape in the first embodiment of the present invention;
Fig. 7B is a top view of the pier and the water-flow control part, where the water-flow control part has a prism shape in the first embodiment of the present invention;
Fig. 8A is an anterior view of the pier and the water-flow controlpart, viewed from the upstream side , where the water-flow control part has a quadrangular pyramid shape in the first embodiment of the present invention;
Fig. 8B is a top view of the pier and the water-flow control part, where the water-flow control part has a quadrangular pyramid shape in the first embodiment of the present invention;
Fig. 9A is an anterior view of the pier and the water-flow controlpart, viewed from the upstream side, where the water-flow control part has a triangular pyramid shape in the first embodiment of the present invention;
Fig. 9B is a top view of the pier and the water-flow control part, where the water-flow control part has a triangular pyramid shape in the first embodiment of the present invention;
Fig. 10A is an anterior view of the pier and the water-flow control part, viewed from the upstream side , where the water-f low control part has a triangular pyramid shape with an inclined vertex in the first embodiment of the present invention;
Fig. 10B is a top view of the pier and the water-flow control part, where the water-flow control part has a triangular pyramid shape with an inclined vertex in the first embodiment of the present invention;
Figs. 11A and 11B are a top view and a side view, respectively, showing a flow in the vicinity of a junction of an upstream-side end of a pier and a draft tube in a second embodiment of the present invention; and
Figs. 12A and 12B are a top view and a side view, respectively, showing a flow in a vicinity of a junction of an upstream-side end of a pier and a draft tube in a third embodiment of the present invention.

### DETAILED DESCRIPTION OF THE PREFERRED EMBODIMENTS

Embodiments of a draft tube of hydraulic machinery in accordance with the present invention will now be described with reference to the attached drawings.

### [First Embodiment]

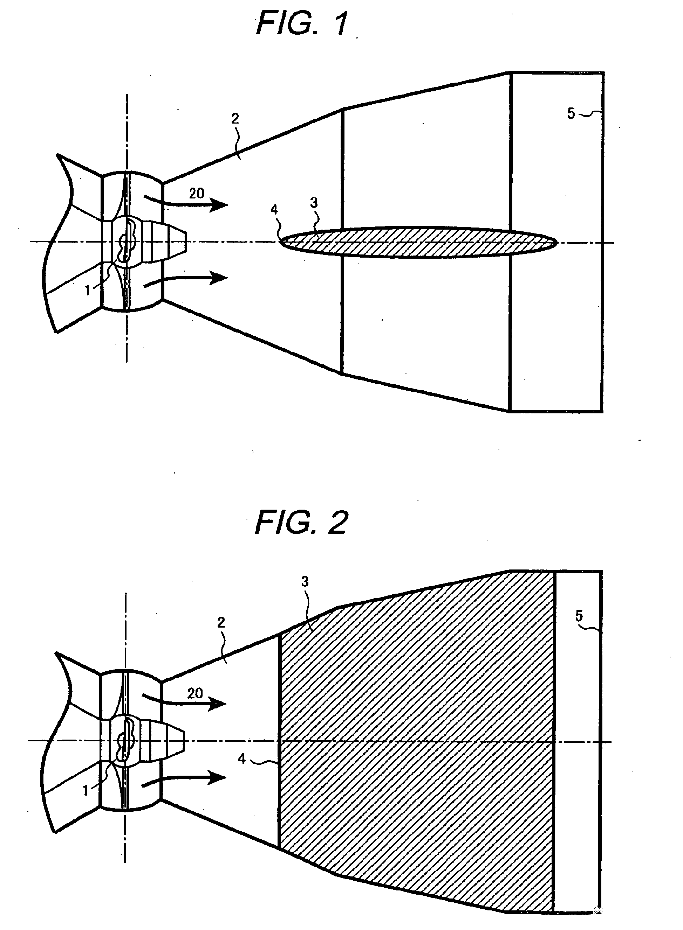

With reference to Figs. 1 and 2, an embodiment of a draft tube of hydraulic machinery in accordance with the present invention is shown. The hydraulic machinery is applied, for example, to a horizontal shaft Kaplan turbine (a bulb turbine or a tubular turbine) in a hydro power plant. An application of the present invention is not limited to this kind of turbine. In Figs. 1 and 2, a water-flow control part is not shown in order to illustrate the outline of the entire hydraulic machinery.

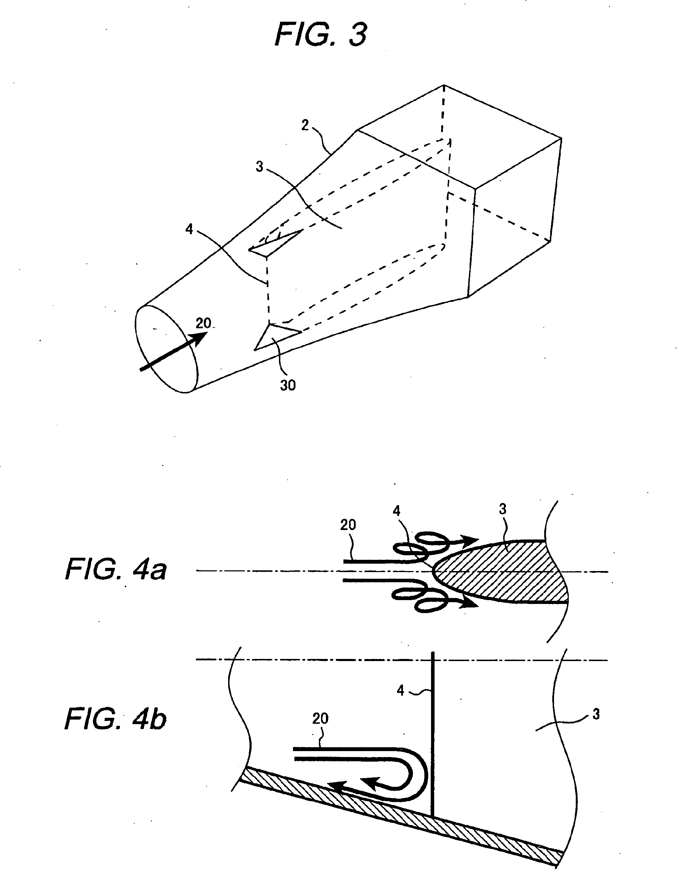

As shown in Figs. 1 and 2, a draft tube 2 of the hydraulic machinery is provided on the downstream side of a rotatably supported runner 1 so as to guide a flow 20 with a swirl from the runner 1 to a tailrace outlet 5. The draft tube 2, the internal cross-sectional area of which gradually increases toward the down stream, decelerates the interior flow and enhances the pressure of the flow. Thus, the draft tube plays a role to reduce discharged kinetic energy. A pier 3 is provided on the interior of the draft tube 2 of the hydraulic machinery as a reinforcing member. The pier 3 is supported by at least one portion of an inner wall of the draft tube 2. (In this embodiment, the pier 3 is supported by two portions, upper and lower.) Moreover, the pier 3 is provided at a position where the radial length of the draft tube 2, at least in the vicinity of an upstream-side end 4 of the pier 3, increases toward the down stream. (In Fig. 2, the pier 3 is provided at a position where the radial length of the draft tube 2 increases toward the down stream, except for the vicinity of a downstream-side end of the pier 3.) Therefore, if a water-flow control part according to the present invention to be described in detail with reference to Figs. 3 to 12B is not provided, an angle between the upstream-side end 4 of the pier 3 and the inner wall of the draft tube 2 is less than 90° at a junction of the upstream-side end 4 of the pier 3 and the inner wall of the draft tube 2.

With reference to Fig. 3, the draft tube 2 of the hydraulic machinery in accordance with a first embodiment of the present invention is translucently illustrated, with the pier 3 in the draft tube 2, viewed from the downstream side of the runner 1 shown in Fig. 1 and 2. The both ends of the pier 3 are fixed to the inner wall of the draft tube 2 without gap. The pier 3, generally made of concrete, is designed in a flat columnar shape for simple production. Accordingly, it is difficult to slightly deform the pier or sharpen the end of the pier for water flow control. In the structure of this embodiment shown in Fig. 3, to avoid a complicated production process of the pier 3, a water-flow control part 30 is attached to the pier 3 on the upstream side in the vicinity of the junction of the upstream-side end 4 of the pier 3 and the draft tube 2.

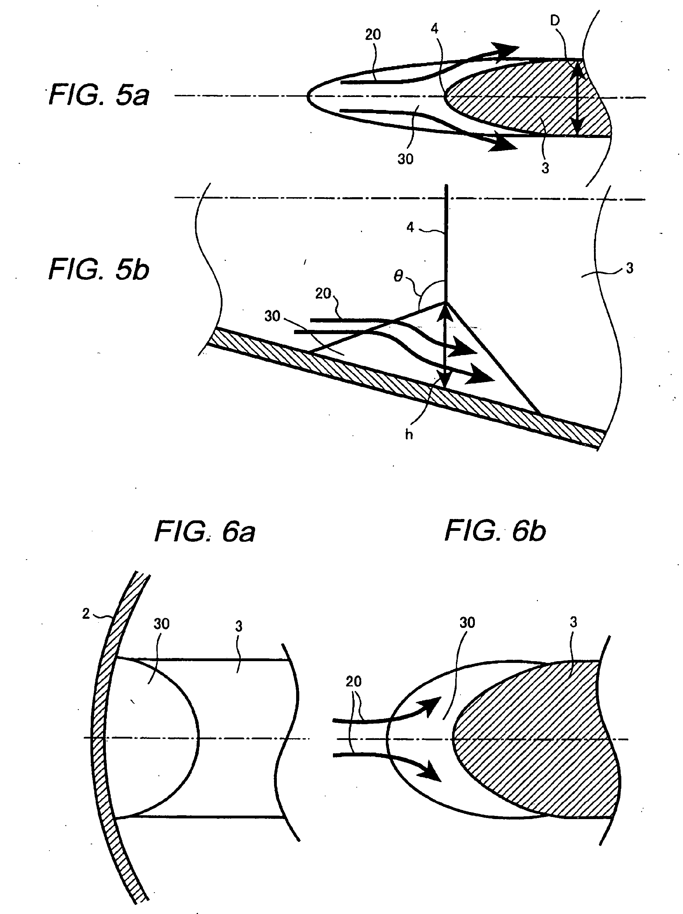

If this water-flow control part is not provided, the above-mentioned reference shows that a horseshoe vortex is generated in the vicinity of the junction of the upstream-side end 4 of the pier 3 and the draft tube 2 as shown in Figs. 4A and 4B. Generation of the horseshow vortex can be suppressed if the water-flow control part 30 is provided on the upstream side in the vicinity of the junction, where the horseshoe vortex is generated, as shown in Figs. 5A and 5B . As a result, energy loss by a reverse flow due to generation of the horseshoe vortex can be reduced.

Preferably, an angle θ between the upstream-side end 4 of the pier 3 and an upper surface of the water-flow control part 30 is equal to 90° ormore in a plane including a cross-section of the pier 3 viewed from a side surface of the draft tube 2 (that is, within a plane which is parallel to a central axis of the draft tube 2 and passes through both of the upstream-side end 4 of the pier 3 and the water-flow control part 30) as shown in Figs. 5A and 5B. If the angle θ is less than 90°, a recessed region having a triangular cross-section is formed between the upstream-side end 4 of the pier 3 and the water-flow control part 30, resulting in a stagnation of the flow and easy generation of the horseshoe vortex.

Preferably, h is equal to 0.1D or more, where D denotes the maximum thickness of the pier 3, and h denotes a length from the inner wall of the draft tube 2 to the surface of the water-flow control part 30 along an extended line of the upstream-side end 4 of the pier 3 toward the inner wall (that is, h is the width of the water-flow control part 30). This is because, since the diameter of a horseshoe vortex is estimated at about 0.1D according to the above-mentioned reference, the water-flow control part 30 is required to have the width h at least equal to or longer than the diameter of the horseshoe vortex in order to effectively prevent the generation of the horseshoe vortex.

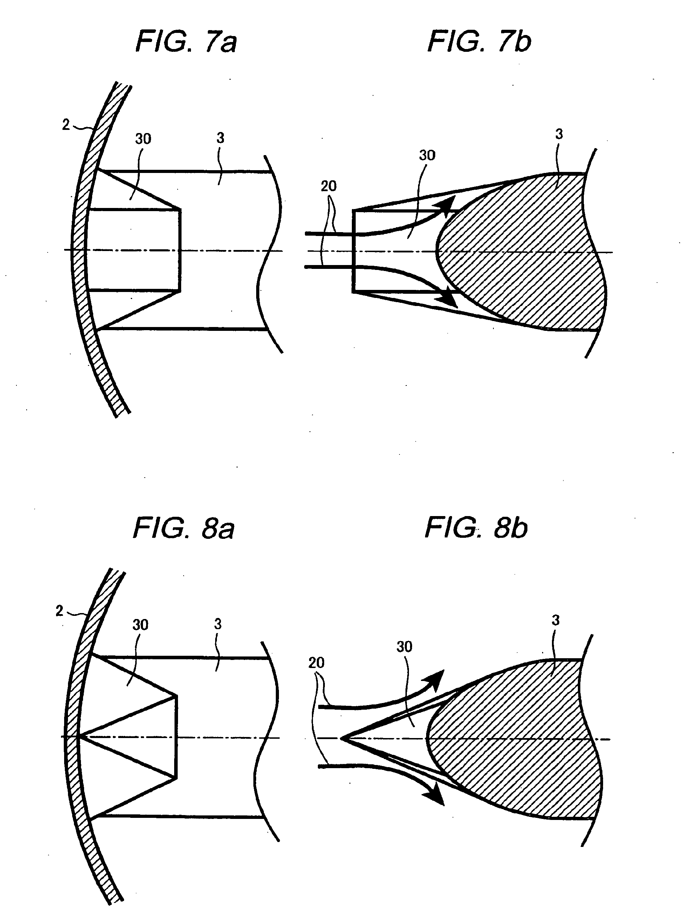

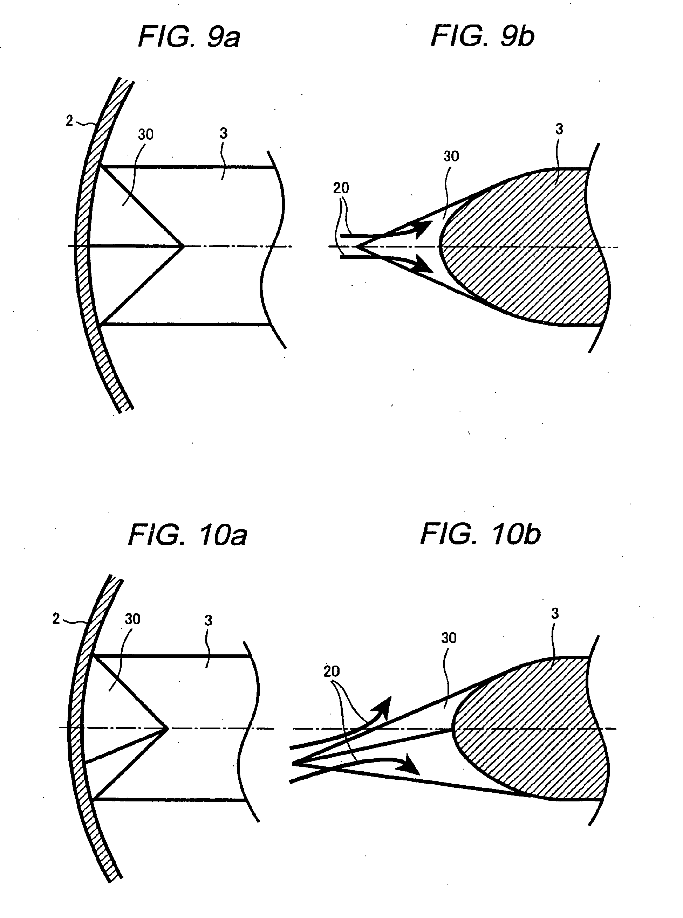

The water-flow control part 30 attached to the pier 3 may have any shape, such as an oval shape as shown in Figs. 6A and 6B, a prism shape as shown in Figs. 7A and 7B, or a quadrangular pyramid shape as shown in Figs. 8A and 8B. It is preferable to have a triangular pyramid shape as shown in Figs. 9A and 9B. (Note that a water-flow control part 30 having a quadrangular or triangular pyramid shape is arranged with the vertex in contact with the inner wall of the draft tube 2 on the upstream side and with the bottom surface in contact with the upstream-side end 4 of the pier 3 on the downstream side.) The water-flow control part 30 having a triangular pyramid shape not only divides a flow from the upstream toward the down stream along the draft tube 2 into two flows on the left side and right side of the pier 3, but also helps to divide a flow from the central portion of a flow channel toward the wall of the draft tube 2. The water-flow control part 30 can have a triangular pyramid shape with a vertex inclined along the direction of the swirl (along the direction of the water flow by the swirl), as shown in Figs. 10A and 10B, in order to deal with a swirl of the flow 20 in the draft tube 2 as is often the case.

### [Second Embodiment]

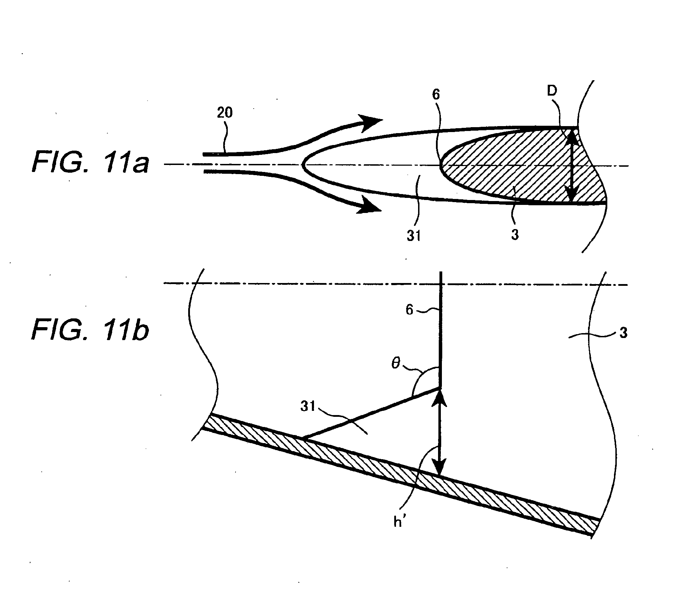

With reference to Figs. 11A and 11B, a draft tube of hydraulic machinery in accordance with a second embodiment of the present invention includes a pier 3 which has a projection 31 projecting toward the upstream side to suppress generation of a horseshoe vortex. The projection 31 is formed as a part of the pier 3 and works as a water-flow control part. The draft tube does not include a body other than the pier 3 as a water-flow control part in the vicinity of the junction of the upstream-side end 4 of the pier 3 and the draft tube 2. Upon production of the pier 3 in accordance with this embodiment, the interior of the projection 31 should be filled with concrete or filled with some material in advance, although a body, as in the case of the first embodiment, to be attached to the pier 3 as a water-flow control part is unnecessary. In this embodiment, generation of a horseshoe vortex can be suppressed, as in the case of the first embodiment, since the projection 31 is provided as a water-flow control part at a position where a horseshoe vortex occurs, or at the upstream side in the vicinity of the junction of the upstream-side end 4 of the pier 3 and the draft tube 2 as shown in Fig. 11. As a result, energy loss by a reverse flow due to generation of the horseshoe vortex can be reduced.

Preferably, an angle θ between an upper surface of the projection 31 and a non-projecting portion 6, which is the upstream-side end 4 of the pier 3,is equal to 90° or more, as in the case of the first embodiment. Preferably, h' is equal to 0.1D or more, where D denotes the maximum thickness of the pier 3, and h' denotes a distance from the inner wall of the draft tube 2 to a boundary of the projection 31 and the non-projecting portion 6, as in the case of the first embodiment. The projection 31 may have any shape, such as an oval shape, a prism shape, or a quadrangular pyramid shape. It is preferable to have a triangular pyramid shape as in the case of the first embodiment. The projection 31 can have a triangular pyramid

### shape with a vertex inclined along the direction of the swirl.

### [Third Embodiment]

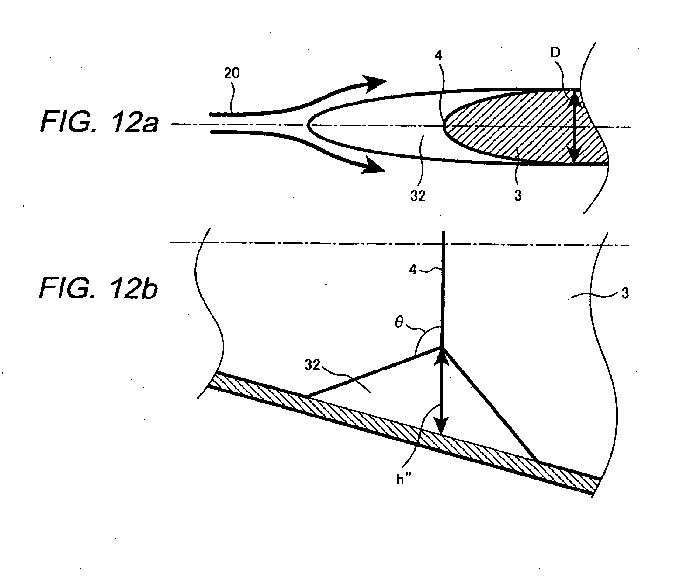

With reference to Figs. 12A and 12B, a draft tube of hydraulic machinery in accordance with a third embodiment of the present invention includes a water-flow control part 32 formed by projecting the draft tube 2 into the flow channel in the vicinity of the junction of the upstream-side end 4 of the pier 3 and the draft tube 2. (The water-flow control part 32 is formed as a part of the inner wall of the draft tube 2.) In the first and second embodiments, it is necessary to connect the water-flow control part and the draft tube 2 without gap. In the third embodiment, the water-flow control part and the draft tube 2 are seamless, bringing in an advantage of reducing costs for making the draft tube. Preferably, an angle θ between an upper surface of the water-flow control part 32 projected from the draft tube 2 and the upstream-side end 4 of the pier 3 is equal to 90° or more, as in the case of the first and second embodiments. Preferably, h" is equal to 0.1D or more, where D denotes the maximum thickness of the pier 3, and h" denotes a distance from the inner wall of the draft tube 2 to a most distant part of the water-flow control part 32, as in the case of the first and second embodiments. The water-flow control part 32 may have any shape, such as an oval shape, a prism shape, or a quadrangular pyramid shape. It is preferable to have a triangular pyramid shape as in the case of the first and second embodiments. The water-flow control part 32 can have a triangular pyramid shape with a vertex inclined along the direction of the swirl. As a modification of this embodiment, the water-flow control part 32 may be separately made, not as a part of the draft tube 2, and attached to the draft tube 2. This modification also leads to the above-described advantages of the present invention.

## Claims

1. A draft tube (2) of hydraulic machinery, being provided between a downstream side of a runner (1) of the hydraulic machinery and an upstream side of a tailrace outlet (5) of the hydraulic machinery, and having an internal cross-sectional area increasing toward a down stream, **characterized in that** the draft tube comprises:
a pier (3) being supported with at least one portion of an inner wall of the draft tube (2); and
water-flow control parts (30, 31, 32) being provided on an upstream side of a junction of an upstream-side end (4) of the pier (3) and the inner wall, the water-flow control part (30, 31, 32) suppressing generation of stagnation on the upstream side of the junction,
**characterized in that** the water-flow control parts (30, 31, 32) include
a first water-flow control part (30, 31, 32) being arranged on a junction of an upper part of the upstream-side end (4) and an upper part of the inner wall, and
a second water-flow control part (30, 31, 32) being arranged on a junction of a lower part of the upstream-side end (4) and a lower part of the inner wall.

2. The draft tube (2) of the hydraulic machinery according to claim 1, wherein each of the water-flow control parts (30) is formed such that an angle between the upstream-side end (4) of the pier (3) and a surface of the water-flow control part (30) is equal to or greater than 90[deg.] in a plane including a cross-section of the pier (3) viewed from a side surface of the draft tube (2).

3. The draft tube (2) of the hydraulic machinery according to claim 2, wherein each of the water-flow control parts (30) is formed such that a length from the inner wall of the draft tube to a surface of the water-flow control part (30) along an extended line of the upstream-side end (4) of the pier (3) toward the inner wall is equal to 0.1D or more, where D denotes a maximum thickness of the pier (3).

4. The draft tube (2) of the hydraulic machinery according to claim 1, wherein each of the water-flow control parts (30) is formed such that a length from the inner wall of the draft tube to a surface of the water-flow control part (30) along an extended line of the upstream-side end (4) of the pier (3) toward the inner wall is equal to 0.1D or more, where D denotes a maximum thickness of the pier (3).

5. The draft tube (2) of the hydraulic machinery according to claim 1, wherein each of the water-flow control parts (30) has a triangular pyramid shape and is arranged with a vertex in contact with the inner wall of the draft tube on an upstream side and with a bottom surface in contact with the upstream-side end (4) of the pier (3) on a downstream side.

6. The draft tube (2) of the hydraulic machinery according to any one of claims 2 to 4, wherein each of the water-flow control parts (30) has a triangular pyramid shape and is arranged with a vertex in contact with the inner wall of the draft tube on an upstream side and with a bottom surface in contact with the upstream-side end (4) of the pier (3) on a downstream side.

7. The draft tube (2) of the hydraulic machinery according to claim 5 or 6, wherein each of the water-flow control parts (30) in the triangular pyramid shape has the vertex inclined along the direction of a swirl of a water flow in the draft tube (2).

8. The draft tube (2) of the hydraulic machinery according to any one of claims 1 to 7, wherein each of the water-flow control parts (31) is formed as a part of the pier (3).

9. The draft tube (2) of the hydraulic machinery according to any one of claims 1 to 7, wherein each of the water-flow control parts (32) is formed as a part of the inner wall of the draft tube.

10. The draft tube (2) of the hydraulic machinery according to any one of claims 1 to 7, wherein each of the water-flow control parts (30) is attached to the pier (3) or the inner wall of the draft tube.

## Patentansprüche

1. a. Saugrohr (2) einer hydraulischen Maschine, das zwischen einer Ablaufseite eines Läufers (1) der hydraulischen Maschine und einer Zulaufseite eines Abflussauslasses (5) der hydraulischen Maschine vorgesehen ist und eine innere Querschnittsfläche besitzt, die in Ablaufrichtung zunimmt, **dadurch gekennzeichnet, dass** das Saugrohr umfasst:
einen Pfeiler (3), der von mindestens einem Abschnitt einer Innenwand des Saugrohrs (2) getragen wird; und
Wasserflusssteuerteile (30, 31, 32), die zulaufseitig von einer Verbindungsstelle eines zulaufseitigen Endes (4) des Pfeilers (3) und der Innenwand vorgesehen sind, wobei das Wasserflusssteuerteil (30, 31, 32) die Entstehung einer Stauung zulaufseitig von der Verbindungsstelle unterdrückt,
**dadurch gekennzeichnet, dass** die Wasserflusssteuerteile (30, 31, 32) umfassen:
ein erstes Wasserflusssteuerteil (30, 31, 32), das an einer Verbindungsstelle eines oberen Teils des zulaufseitigen Endes (4) und eines oberen Teils der Innenwand angeordnet ist, und
ein zweites Wasserflusssteuerteil (30, 31, 32), das an einer Verbindungsstelle eines unteren Teils des zulaufseitigen Endes (4) und eines unteren Teils der Innenwand angeordnet ist.

2. Saugrohr (2) der hydraulischen Maschine nach Anspruch 1, wobei jedes der Wasserflusssteuerteile (30) so ausgebildet ist, dass ein Winkel zwischen dem zulaufseitigen Ende (4) des Pfeilers (3) und einer Oberfläche des Wasserflusssteuerteils (30) größer oder gleich 90 Grad in einer Ebene ist, die einen Querschnitt des Pfeilers (3), der von einer Seitenfläche des Saugrohrs (2) betrachtet ist, enthält.

3. Saugrohr (2) der hydraulischen Maschine nach Anspruch 2, wobei jedes der Wasserflusssteuerteile (30) so ausgebildet ist, dass eine Länge von der Innenwand des Saugrohrs zu einer Oberfläche des Wasserflusssteuerteils (30) entlang einer verlängerten Linie des zulaufseitigen Endes (4) des Pfeilers (3) in Richtung der Innenwand größer oder gleich 0,1 D ist, wobei D eine maximale Dicke des Pfeilers (3) bezeichnet.

4. Saugrohr (2) der hydraulischen Maschine nach Anspruch 1, wobei jedes der Wasserflusssteuerteile (30) so ausgebildet ist, dass eine Länge von der Innenwand des Saugrohrs zu einer Oberfläche des Wasserflusssteuerteils (30) entlang einer verlängerten Linie des zulaufseitigen Endes (4) des Pfeilers (3) in Richtung der Innenwand größer oder gleich 0,1 D ist, wobei D eine maximale Dicke des Pfeilers (3) bezeichnet.

5. Saugrohr (2) der hydraulischen Maschine nach Anspruch 1, wobei jedes der Wasserflusssteuerteile (30) eine Dreieckspyramidenform besitzt und mit einer Spitze in Kontakt mit der Innenwand des Saugrohrs auf einer Zulaufseite und mit einer unteren Oberfläche in Kontakt mit dem zulaufseitigen Ende (4) des Pfeilers (3) auf einer Ablaufseite angeordnet ist.

6. Saugrohr (2) der hydraulischen Maschine nach einem der Ansprüche 2 bis 4, wobei jedes der Wasserflusssteuerteile (30) eine die Form einer dreieckigen Pyramide besitzt und mit einer Spitze in Kontakt mit der Innenwand des Saugrohrs auf einer Zulaufseite und einer unteren Oberfläche in Kontakt mit dem zulaufseitigen Ende (4) des Pfeilers (3) auf einer Ablaufseite angeordnet ist.

7. Saugrohr (2) der hydraulischen Maschine nach Anspruch 5 oder 6, wobei die Spitze bei jedem der Wasserflusssteuerteile (30) in der Form einer dreieckigen Pyramide entlang der Richtung eines Wirbels eines Wasserflusses in dem Saugrohr (2) geneigt ist.

8. Saugrohr (2) der hydraulischen Maschine nach einem der Ansprüche 1 bis 7, wobei jedes der Wasserflusssteuerteile (31) als ein Teil des Pfeilers (3) ausgebildet ist.

9. Saugrohr (2) der hydraulischen Maschine nach einem der Ansprüche 1 bis 7, wobei jedes der Wasserflusssteuerteile (32) als ein Teil der Innenwand des Saugrohrs ausgebildet ist.

10. Saugrohr (2) der hydraulischen Maschine nach einem der Ansprüche 1 bis 7, wobei jedes der Wasserflusssteuerteile (30) an dem Pfeiler (3) oder der Innenwand des Saugrohrs befestigt ist.

## Revendications

1. Tube de tirage (2) pour une machine hydraulique, qui est prévu entre un côté aval d'un rotor (1) de la machine hydraulique et un côté amont d'une sortie de fuite (5) de la machine hydraulique, et ayant une superficie de section transversale interne en augmentation vers un côté aval, **caractérisé en ce que** le tube de tirage comprend :
un pilier (3) qui est supporté avec au moins une portion d'une paroi intérieure du tube de tirage (2) ; et
des pièces de commande d'écoulement d'eau (30, 31, 32) qui sont prévues sur un côté amont d'une jonction d'une extrémité côté amont (4) du pilier (3) et de la paroi intérieure, la pièce de commande d'écoulement d'eau (30, 31, 32) supprimant la génération d'une stagnation sur le côté amont de la jonction,
**caractérisé en ce que** les pièces de commande d'écoulement d'eau (30, 31, 32) incluent
une première pièce de commande d'écoulement d'eau (30, 31, 32) qui est agencée sur une jonction d'une partie supérieure de l'extrémité côté amont (4) et d'une partie supérieure de la paroi intérieure, et
une seconde pièce de commande d'écoulement d'eau (30, 31, 32) qui est agencée sur une jonction d'une partie inférieure de l'extrémité côté amont (4) et d'une partie inférieure de la paroi intérieure.

2. Tube de tirage (2) pour machine hydraulique selon la revendication 1, dans lequel chacune des pièces de commande d'écoulement d'eau (30) est formée de telle manière qu'un angle entre l'extrémité côté amont (4) du pilier (3) et une surface de la pièce de commande d'écoulement d'eau (30) est égal ou supérieur à 90° dans un plan incluant une section transversale du pilier (3), vu depuis une surface latérale du tube de tirage (2).

3. Tube de tirage (2) pour machine hydraulique selon la revendication 2, dans lequel chacune des pièces de commande d'écoulement d'eau (30) est formée de telle manière qu'une longueur depuis la paroi intérieure du tube de tirage jusqu'à une surface de la pièce de commande d'écoulement d'eau (30) le long d'une ligne en extension de l'extrémité côté amont (4) du pilier (3) vers la paroi intérieure est égale à 0,1D ou plus, où D désigne une épaisseur maximum du pilier (3).

4. Tube de tirage (2) pour machine hydraulique selon la revendication 1, dans lequel chacune des pièces de commande d'écoulement d'eau (30) est formée de telle manière qu'une longueur depuis la paroi intérieure du tube de tirage jusqu'à une surface dé la pièce de commande d'écoulement d'eau (30) le long d'une ligne en extension de l'extrémité côté amont (4) du pilier (3) vers la paroi intérieure est égale à 0,1D ou plus, où D désigne une épaisseur maximum du pilier (3).

5. Tube de tirage (2) pour machine hydraulique selon la revendication 1, dans lequel chacune des pièces de commande d'écoulement d'eau (30) a une forme pyramidale triangulaire et est agencée avec un sommet en contact avec la paroi intérieure du tube de tirage sur un côté amont et avec une surface inférieure en contact avec l'extrémité côté amont (4) du pilier (3) sur un côté aval.

6. Tube de tirage (2) pour machine hydraulique selon l'une quelconque des revendications 2 à 4, dans lequel chacune des pièces de commande d'écoulement d'eau (30) a une forme pyramidale triangulaire et est agencée avec un sommet en contact avec la paroi intérieure du tube de tirage sur un côté amont et avec une surface inférieure en contact avec l'extrémité côté amont (4) du pilier (3) sur un côté aval.

7. Tube de tirage (2) pour machine hydraulique selon la revendication 5 ou 6, dans lequel chacune des pièces de commande d'écoulement d'eau (30) sous la forme pyramidale triangulaire possède un sommet incliné le long de la direction d'un tourbillonnement d'un écoulement d'eau dans le tube de tirage (2)

8. Tube de tirage (2) pour machine hydraulique selon l'une quelconque des revendications 1 à 7, dans lequel chacune des pièces de commande d'écoulement d'eau (31) est formée en tant que partie du pilier (3).

9. Tube de tirage (2) pour machine hydraulique selon l'une quelconque des revendications 1 à 7, dans lequel chacune des pièces de commande d'écoulement d'eau (32) est formée en tant que partie de la paroi intérieure du tube de tirage.

10. Tube de tirage (2) pour machine hydraulique selon l'une quelconque des revendications 1 à 7, dans lequel chacune des pièces de commande d'écoulement d'eau (30) est attachée au pilier (3) ou à la paroi intérieure du tube de tirage.
